# EUROPÄISCHE PATENTANMELDUNG

(11) **EP 1 832 878 A1**
(43) Veröffentlichungstag der Anmeldung: **12.09.2007**
(21) Anmeldenummer: 07004614.9
(22) Anmeldetag: 06.03.2007
(51) Int. Cl.: G01N 35/00

(54) **Behältnis mit einem manipulationssicheren Informationsträger**

(30) Priorität: 07.03.2006 DE 202006003578 U
(71) Anmelder: Hamilton Bonaduz AG, 7402 Bonaduz (CH)
(72) Erfinder: Arquint, Philipp, 7402 Bonaduz (CH); Loepfe, Reto Guido, 7403 Rhäzüns (CH); Tillich, Dirk, 7402 Bonaduz (CH)
(74) Vertreter: Trossin, Hans-Jürgen

(57) **Zusammenfassung**

Ein Behältnis (10) umfasst eine zur Speicherung einer Substanz (12) ausgebildete Speicherkammer (14) mit einer Entnahmeöffnung (22), durch die die Substanz (12) aus der Speicherkammer entnehmbar ist, und einen dem Behältnis (10) zugeordneten Informationsträger (30), der eine der gespeicherten Substanz (12) zugeordnete Identifikationsinformation trägt. Wenigstens im gebrauchsfertig befüllten Zustand des Behältnisses (10) ist der Informationsträger (30) nur von der Speicherkammer (14) her zugänglich.

## Beschreibung

Die vorliegende Erfindung betrifft ein Behältnis mit einer zur Speicherung einer Substanz ausgebildeten Speicherkammer, die eine Entnahmeöffnung aufweist, durch die die Substanz aus der Speicherkammer entnehmbar ist. Dem Behältnis ist ein Informationsträger zugeordnet, der eine der gespeicherten Substanz zugeordnete Identifikationsinformation trägt.

Bei bekannten derartigen Behältnissen ist in der Regel an der Außenseite ein Etikett angebracht, an dem Informationen über eine gespeicherte Substanz ablesbar sind. Als Beispiel hierzu wird auf die US 6,579,717 B1 verwiesen, bei der zur Identifikation von in Flaschen aufbewahrten Kalibrationslösungen zur (bio-)chemischen Flüssigkeitsanalyse eine auf der Flasche beispielsweise in Form eines Barcodes aufgedruckte Identifikationsnummer automatisch ablesbar ist.

Die EP 0 353 589 zeigt ein Messsystem zur chemischen Analyse von Flüssigkeitsproben, bei dem eine Reagenzkassette in einem gemeinsamen Volumen angeordnete Messstellen trägt, die jeweils ein bestimmtes Testreagenz enthalten, und eine flüssige zu untersuchende Probe in das Volumen gegeben wird, wo sie dann mit den einzelnen Messstellen reagiert. Zur Identifikation von Kalibrationsdaten von Reagenzien in maschinenlesbarer Form wird vorgeschlagen, neben dem Volumen einen Barcode anzubringen, der den einzelnen Messstellen zugeordnete Kalibrationsinformationen enthält. Weitere Informationen können sich außerdem noch auf einem Etikett an der Kassette befinden. Bei einem in der WO 97/29847 vorgeschlagenen Analysesystem befinden sich Messstreifen in einem Behälter, in das ein Probefluid gefüllt wird. Am Behälter befindet sich Information zu jedem Messstreifen, beispielsweise Kalibrationsdaten, Verfallsdatum u.ä. der Messstreifen im Behälter. Die Information kann beispielsweise als Barcode, Speicherchip oder Magnetstreifen gespeichert sein.

Aus der US 2004/0138793 A1 ist ein Reifenluftdrucksensor bekannt, der innerhalb des Reifens angeordnet ist, um den Luftdruck zu messen und an eine Steuereinheit zu übertragen. Der Sensor überträgt mit dem gemessenen Luftdrucksignal eine Identifikationsnummer, anhand derer die Steuereinheit erkennen kann, welchem Reifen ein empfangenes Luftdrucksignal zuzuordnen ist.

Demgegenüber löst die vorliegende Erfindung die Aufgabe, ein Behältnis mit einer darin gespeicherten Substanz bereitzustellen, welches in automatisierter Weise und dabei in möglichst sicherer Zuordnung zur Substanz mit der Substanz zugeordneter Information versehen werden kann oder/und von dem die Information ausgelesen werden kann.

Gemäß einem ersten Aspekt der Erfindung wird diese Aufgabe durch ein Behältnis gelöst, umfassend eine zur Speicherung einer Substanz ausgebildete Speicherkammer mit einer Entnahmeöffnung, durch die die Substanz aus der Speicherkammer entnehmbar ist und einen dem Behältnis zugeordneten Informationsträger, der eine der gespeicherten Substanz zugeordnete Identifikationsinformation trägt, wobei wenigstens im gebrauchsfertig befüllten Zustand des Behältnisses der Informationsträger nur von der Speicherkammer her zugänglich ist.

Zugänglich ist hierbei so zu verstehen, dass jedweder mechanische Zugriff auf den Datenträger nur von der Seite der Speicherkammer her erfolgen kann. Hat man ein mit dem Informationsträger versehenes erfindungsgemäßes Behältnis einmal mit der Substanz befüllt, so ist ein Austausch oder eine Manipulation des Informationsträgers nicht mehr realisierbar, ohne dass hierbei ein Werkzeug oder/und der Informationsträger selbst mit der Substanz in Kontakt gelangt. Der Informationsträger kann also einerseits nicht unbeabsichtigt verloren gehen, ohne dass gleichzeitig auch die gespeicherte Substanz verloren geht bzw. aus der Speicherkammer austritt. Andererseits ist auch ein mutwilliger Austausch bzw. Veränderung des Informationsträgers nur unter Inkaufnahme einer möglicherweise stattfindenden Veränderung, insbesondere einer Kontamination, der gespeicherten Substanz realisierbar.

Gemäß einem zweiten Aspekt der Erfindung wird die genannten Aufgabe gelöst durch ein Behältnis, umfassend eine zur Speicherung einer Substanz ausgebildete Speicherkammer mit einer Wandung und einer Entnahmeöffnung, durch die Substanz aus der Speicherkammer entnehmbar ist sowie einen dem Behältnis zugeordneten Informationsträger, der eine der gespeicherten Substanz zugeordnete Identifikationsinformation trägt, wobei der Informationsträger in die Wandung integriert oder/und eingebettet ist.

Bei dieser Lösung ist der Informationsträger derart in der Wandung vorgesehen, dass ein mechanischer Zugriff auf den Informationsträger weder von der Speicherkammer her noch von der Außenseite des Behältnisses her möglich ist, ohne die Wandung zu zerstören bzw. wenigstens zu beschädigen. Ein einmal hergestelltes und mit der Substanz befülltes Behältnis ist somit unwiderruflich der Substanz zugeordnet.

Auf dem Informationsträger kann wenigstens eine von der Identifikationsinformation unabhängige weitere Information speicherbar sein. Die weitere Information kann beispielsweise zur näheren Kennzeichnung der gespeicherten Substanz dienen und etwa deren Herstellungsdatum, ein Verfallsdatum, eine nähere Charakterisierung der Substanz (z.B. bei Kalibrationslösungen entsprechende Kalibrationsdaten, eine die Herstellung kennzeichnende Batchnummer oder/und die Nummer eines Zertifikats, von dem sich die Kalibrationslösung ableitet) enthalten.

Während es in den meisten Fällen ausreichen wird, wenn die Identifikationsinformation oder/und die weitere Information nur einmal, nämlich bei Herstellung des Behältnisses am Behältnis anbringbar ist, ist es günstig, wenn die Identifikationsinformation oder/und die weitere Information auch im gebrauchsfertig befüllten Zustand des Behältnisses sowie in jedem Zustand nach bestimmungsgemäßer Entnahme der Substanz aus der Speicherkammer aus dem Informationsträger auslesbar ist. Es ist dann nämlich nicht notwendig, bei jeder Entnahme benötigte Daten bzw. solche Daten, die sich bei jeder Entnahme ändern (beispielsweise eine verbleibende Restmenge der Substanz) von neuem manuell einzugeben oder zu berechnen.

Die Identifikationsinformation oder/und die weitere Information kann beispielsweise auf nicht berührende Weise, insbesondere durch elektromagnetische Wellen, aus dem Informationsträger auslesbar sein, so dass zur Informationsübertragung nicht zwangsläufig ein mechanischer Kontakt zwischen dem Behältnis bzw. Informationsträger und einer entsprechenden Leseeinrichtung erforderlich ist. Auch hierbei gilt, dass es günstig ist, wenn die Identifikationsinformation oder/und die weitere Information zwar mehrfach auf nicht berührende Weise auslesbar ist, es jedoch in der Regel es ausreichend ist, wenn die Information lediglich ein einziges Mal anbringbar ist und danach nicht mehr überschrieben werden kann. Insbesondere hinsichtlich der Identifikationsinformation dürfte dies in der Regel angestrebt sein, dass eine bei der erstmaligen Anbringung einmal erfolgte Zuordnung von Identifikationsinformation zum Behältnis unveränderbar ist.

Die Identifikationsinformation oder/und die weitere Information kann durch Radiowellen übertragbar sein, vorzugsweise im Langwellenbereich mit Frequenzen zwischen 30 und 50 kHz oder im Kurzwellenbereich mit Frequenzen zwischen 10 und 15 MHz. Der gemäß dieser Ausführungsform als Transponder eines Radiowellenidentifikationssystems (Radio Frequency Identification Device, RFID) ausgebildete Informationsträger dient dann als ein Datenspeicher, dessen gespeicherte Information durch ein entsprechendes Lesegerät (RFD-Reader) berührungslos ausgelesen werden kann. Der RFID-Transponder braucht in der Regel keine eigene Energieversorgung, sondern bezieht die zum Betrieb erforderliche Energie aus den empfangenen Radiowellen (passiver Radiowellenidentifikationstransponder). Dies gilt insbesondere dann, wenn die Information mit Frequenzen im Langwellenbereich zwischen 30 und 50 kHz oder im Kurzwellenbereich mit Frequenz zwischen 10 und 15 MHz übertragen wird. Daneben sind auch Übertragungsfrequenzen im Ultrakurzwellenbereich zwischen 850 und 950 MHz oder im Mikrowellenbereich zwischen 2,4 und 2,5 GHz denkbar. In diesem Fall ist jedoch in der Regel eine, wenn auch nur schwache, eigene Energieversorgung für den RFID-Transponder erforderlich, was einen gewissen Mehraufwand verursacht. Die RFID-Technologie ist an sich bekannt, beispielsweise bei Systemen zur Zutrittskontrolle, im öffentlichen Personennahverkehr, zur Identifikation von Tieren sowie bei elektronischen Wegfahrsperren. Die Kopplung zwischen Transponder und Lesegerät kann sowohl kapazitiv als auch vorzugsweise induktiv erfolgen, wobei selbstverständlich auch eine Kopplung zwischen Lesegerät und Transponder mit einem induktiven und kapazitiven Anteil denkbar ist. Als Kopplungsreichweite zwischen Lesegerät und Transponder reichen in der Regel geringe Reichweiten von bis zu einem Meter aus, die sich zwischen Lesegerät und Transponder bei induktiver Kopplung ohne eigene Stromversorgung für den Transponder realisieren lassen.

Um eine Kontamination der gespeicherten Substanz durch den Informationsträger möglichst ausschließen zu können, wird vorzugsweise ein passiver Radiowellenidentifikationstransponder eingesetzt, der darüber hinaus vorzugsweise in einem Glaskörper verpackt ist. Bei einem passiven Transponder ist durch den Wegfall einer Stromquelle (beispielsweise einer Batterie) eine Hauptkontaminationsgefahr eliminiert. Wenn darüber hinaus der Transponder beispielsweise in einer Glasampulle gekapselt ist, lässt sich diese Glasampulle durch bekannte Verfahren (beispielsweise Ultraschallbäder und/oder Wärmebehandlung) einen hochreinen Zustand bringen, bevor sie am Behältnis angebracht wird.

Um die Identifikationsinformation in möglichst fälschungssicherer und eindeutiger Weise dem Behältnis und darüber hinaus der im Behältnis gespeicherten Substanz zuordnen zu können, ist es günstig, wenn der Informationsträger einen ersten Speicherbereich zur Speicherung der Identifikationsinformation aufweist, der nur ein einziges Mal, vorzugsweise bei Herstellung des Informationsträgers, beschreibbar ist. Eine solche Identifikationsinformation kann in einer Identifikationsnummer bestehen, die bei den derzeit erhältlichen RFID-Transpondern bereits durch den Hersteller des Chips bei dessen Herstellung abgelegt wird, und zwar in einem solchen Speicherbereich des Chips, der nach erfolgter Herstellung des Chips nur noch unter Zerstörung des Chips veränderbar ist. Der RFID-Transponder und seine Identifikationsnummer sind damit weder vom Hersteller des Behältnisses, noch von irgendeinem anderen Nutzer des Behältnisses in ihrer Zuordnung veränderbar.

Darüber hinaus dürfte es günstig sein, wenn der Informationsträger neben dem ersten Speicherbereich noch einen zweiten Speicherbereich aufweist, der ebenfalls nur ein einziges Mal beschreibbar ist. Vorzugsweise ist der zweite Speicherbereich derart ausgelegt, dass er bei der gebrauchsfertigen Befüllung des Behältnisses mit der Substanz durch ein entsprechendes Schreibgerät beschreibbar ist. Der zweite Speicherbereich kann beispielsweise in der Form eines EPROM- oder EEPROM- oder Flash-Speichers ausgeführt sein, der durch entsprechend kurzwellige elektromagnetische Strahlung (beispielsweise von einem Laser) ein einziges Mal programmierbar ist. In dem zweiten Speicherbereich kann beispielsweise nach Befüllung des Behältnisses mit der Substanz durch den Befüller Information abgespeichert werden, die die eingefüllte Substanz charakterisiert und die vom Nutzer nicht mehr verändert werden soll (z.B. Abfülldatum, Batchnummer der Kalibrationslösung, genaue Kalibrationsdaten dieser Kalibrationslösung, eine Kennzeichnung eines Zertifikats bzw. metrologischen Standards, von dem die Kalibrationslösung abgeleitet ist, oder das Herstellungsdatum der Kalibrationslösung). Dem Nutzer stehen diese Informationen dann bei Entnahme der Substanz zur Verfügung, er kann sie jedoch nicht verändern. So kann beispielsweise sichergestellt werden, dass der Nutzer eine Kalibrationssubstanz nicht mehr nach Ablauf einer vorbestimmten Zeit nach deren Herstellungsdatum verwenden kann.

Sofern die Substanz eine Kalibrationssubstanz ist, deren Ablaufdatum nicht von ihrem Herstellungsdatum abhängt, sondern (auch) von dem Öffnungsdatum des Behältnisses abhängt, ist es vorteilhaft, wenn der Informationsträger einen dritten Speicherbereich aufweist, der ebenfalls nur ein einziges Mal, diesmal jedoch vorzugsweise beim erstmaligen Öffnen des Behältnisses zur Entnahme der Substanz, beschreibbar ist. Die Realisierung dieser Variante macht in der Regel auch beim Nutzer einen entsprechenden Zusatzaufwand erforderlich, da er ein Lese-/Schreibgerät verwenden muss, mittels dem die dritte Information in den dritten Speicherbereich speicherbar ist.

Um dem Nutzer möglichst bequeme und flexible Möglichkeiten der Handhabung des Behältnisses bzw. der darin gespeicherten Substanz zu ermöglichen, ist vorzugsweise vorgesehen, dass der Informationsträger einen vierten Speicherbereich aufweist, der mehrfach überschreibbar ist. Der vierte Speicherbereich ist vorzugsweise zusätzlich zu einem aus erstem bis drittem Speicherbereich vorgesehen. In einfach gelagerten Fällen kann jedoch auch vorgesehen sein, dass auch die genannten Identifikationsinformationen bzw. Befüllungs- oder/und Öffnungsdatum in dem vierten Speicherbereich gespeichert werden, wobei dann eine Manipulation dieser Informationen durch einen nicht berechtigten Nutzer per Software ausgeschlossen werden sollte. In dem überschreibbaren vierten Speicherbereich kann beispielsweise die Anzahl und Menge entnommener Substanz protokolliert werden, so dass jederzeit überwacht werden kann, wann die noch vorhandene Menge von Substanz in dem Behältnis nicht mehr ausreichend ist.

Um eine unzulässige Manipulation am Behältnis oder/und der im Behältnis gespeicherten Substanz zu verhindern, kann vorgesehen sein, dass wenigstens im gebrauchsfertig befüllten Zustand des Behältnisses die Identifikationsinformation nicht oder nur unter zumindest teilweiser Beschädigung der Speicherkammer oder/und deren Wandung überschreibbar ist. Dann ist sichergestellt, dass die Information unverändert bleibt, solange sich die Substanz noch im Behältnis befindet. Wenn darüber hinaus die Identifikationsinformation selbst am entleerten Behältnis nicht ohne dessen Beschädigung überschreibbar ist, kann das Behältnis nicht erneut mit der Substanz befüllt und nicht weiter eingesetzt werden. Dies ist insbesondere dann wichtig, wenn die gespeicherte Substanz eine Kalibrationssubstanz (beispielsweise eine zur Flüssigkeitsanalyse herangezogene Kalibrationslösung) ist, auf deren Integrität bzw. exakt bekannter Zusammensetzung das Ergebnis einer Analyse beruht. Eine unbeabsichtigte Verwendung einer nicht originalen Kalibrationssubstanz kann durch ein erfindungsgemäßes Behältnis weitgehend ausgeschlossen werden, da Beschädigungen am Behältnis vom Anwender leicht erkannt werden können.

Beispielsweise kann der größte Querschnitt der Entnahmeöffnung des Behältnisses im Wesentlichen kleiner sein als der größte Querschnitt des Informationsträgers. Der einmal in die Speicherkammer eingebrachte Informationsträger kann in diesem Fall selbst dann, wenn er innerhalb der Speicherkammer frei beweglich ist, nicht durch die Entnahmeöffnung aus der Speicherkammer entnommen werden.

Um den Informationsträger in der Speicherkammer anzuordnen, kann diese beispielsweise einen Grundkörper und einen mit diesem untrennbar koppelbaren Deckelteil gebildet sein. Bei der Herstellung des Behältnisses wird dann das Deckelteil nach Befüllen der Speicherkammer mit der Substanz und Einbringen der Informationsträgers in die Speicherkammer in unlösbarer Weise mit dem Grundkörper verbunden. Dies kann etwa durch Verschweißen geschehen, aber vorzugsweise auch dadurch, dass das Deckelteil unter starkem Druck in den Grundkörper eingepresst wird.

Zur Entnahme der gespeicherten Substanz aus der Speicherkammer kann das Behältnis eine Einwegverschlussanordnung aufweisen, durch die die Speicherkammer zumindest nach Befüllen mit der Substanz derart verschließbar ist, dass die Substanz nach einer Entnahme nicht oder zumindest nur erschwert in die Speicherkammer zurückführbar ist.

Als Substanz kommt ein Fluid in Frage, vorzugsweise eine Flüssigkeit, die insbesondere eine Kalibrationslösung für physikalische, chemische, biochemische oder biologische Spurenstoffsensoren sein kann. Solche Kalibrationslösungen sind gemäß internationalen Standardvorgaben von einem international anerkannten metrologischen Referenzstandard abzuleiten, damit die mit Hilfe der Kalibrationslösung erhaltenen Messergebnisse quantitativ anerkennbar sind. Der möglichst untrennbaren Zuordnung von Kalibrationslösung zum Informationsträger kommt in diesem Fall eine besondere Bedeutung zu, da nur dann gewährleistet werden kann, dass der "Lebenslauf` einer Kalibrationslösung lückenlos dokumentierbar ist, so dass für eine Kalibrationslösung immer nachvollziehbar ist, von welchem metrologischen Standard sie sich ableitet, wie genau die Kalibrierung ist und inwiefern die verwendete Kalibrationslösung möglichen Kontaminationsquellen ausgesetzt war.

Wie bereits erwähnt wurde, besteht eine besonders einfache Lösung darin, dass der wie vorangehend beschrieben ausgebildete Informationsträger in der Speicherkammer in dem Fluid frei beweglich aufgenommen ist. Es ist dann keinerlei Maßnahme erforderlich, um den Informationsträger an irgendeiner Wandung der Speicherkammer zu befestigen. Vielmehr kann bei Speicherung eines Fluids in der Speicherkammer der Informationsträger in dem gespeicherten Fluid entweder schwimmen oder eingetaucht sein. Solang er in keiner möglichen Lage durch den Querschnitt der Entnahmeöffnung der Speicherkammer passt, ist immer gewährleistet, dass der Informationsträger - zumindest ohne Beschädigungen der Speicherkammer bzw. der Wandung zu verursachen - nicht aus der Speicherkammer entfernt werden kann, ungeachtet dessen ob diese ganz, teilweise oder gar nicht mit der Substanz gefüllt ist.

Gerade für Kalibrationssubstanzen ist es häufig wichtig, dass die Substanz nur aus dem Behältnis entnommen werden kann, jedoch keinesfalls nach ihrer Verwendung zur Kalibration wieder in das Behältnis zurückgeführt werden kann, denn während des Kalibrationsprozesses ist naturgemäß die Kalibrationssubstanz in aller Regel einer Kontaminationsgefahr ausgesetzt bzw. verändert ihre chemische Zusammensetzung. Um ein Behältnis zu realisieren, aus dem ein gespeichertes Fluid ausschließlich entnommen werden kann, nicht jedoch zurück gespeichert werden kann, kann beispielsweise das Behältnis eine weitere Entnahmekammer zur Aufnahme von durch die Entnahmeöffnung entnommenem Fluid aufweisen, die in aufrechter Stellung des Behältnisses oberhalb der Speicherkammer angeordnet ist, wobei die Entnahmekammer eine Mündung einer zur Entnahmeöffnung führenden Fluidleitung aufweist, die - zumindest in aufrechter Stellung des Behältnisses und bei Entnahme eines betriebsgemäßen Fluidvolumens - oberhalb des Fluidpegels in der Entnahmekammer liegt. Durch eine solche "Steigleitung" lässt sich durch eine entsprechende Folge von Dreh- bzw. Kippbewegungen des Behältnisses zwar ein bestimmtes Fluidvolumen aus der Speicherkammer in die Entnahmekammer befördern, es lässt sich jedoch selbst bei noch so geschickter Abfolge von Dreh- bzw. Kippbewegungen des Behältnisses sich einmal in der Entnahmekammer befindliches Fluid nicht wieder zurück in die Speicherkammer fördern. Die zwei- bzw. mehrfache Verwendung eines Fluidvolumens als Kalibrationsfluid aus ein und der derselben Speicherkammer lässt sich so wirkungsvoll unterbinden.

Neben der bereits angesprochenen vorbestimmten Abfolge mehrerer Kippbewegungen lässt sich ein Transport von in der Speicherkammer befindlichem Fluid in die Entnahmekammer auch ganz einfach dadurch realisieren, dass die Speicherkammer komprimierbar ist und die Entnahmeöffnung in einem in aufrechter Stellung des Behältnisses unteren Bereich der Speicherkammer angeordnet ist. Durch Zusammendrücken des Speicherkammervolumens lässt sich dann das gespeicherte Fluid durch die "Steigleitung" zwischen der Entnahmeöffnung und der Entnahmekammer nach oben pumpen.

Um selbst bei Drehen des Fluidbehältnisses zu verhindern, dass Fluid aus der Entnahmekammer in die Speicherkammer zurückfließen kann, kann beispielsweise eine Anordnung vorgesehen sein, bei der sich die in der Mündung der Fluidleitung in die Speicherkammer ausgebildete Entnahmeöffnung in jeder Stellung des Behältnisses, in der der Pegel eines in der Entnahmekammer befindlichen Fluids höher liegt als die Mündung der Fluidleitung in die Entnahmekammer, höher liegt als die Mündung der Fluidleitung in die Entnahmekammer.

Zum Übertragen von Informationen zwischen dem am Behältnis befindlichen Informationsträger und einer entsprechenden Anwendungseinrichtung, in der die gespeicherte Substanz verwendet werden soll, ist erfindungsgemäß auch eine Lese-/Schreibeinrichtung für einen in einem Behältnis der genannten Art befindlichen Informationsträger vorgesehen, umfassend eine Aufnahme für das Behältnis, eine Einrichtung zum berührungslosen Lesen von in einem ersten Speicherbereich des Informationsträgers oder/und von in wenigstens einem weiteren Speicherbereich des informationsträgers gespeicherter Information. Diese Lese-/Schreibeinrichtung umfasst vorzugsweise auch eine Einrichtung zum Schreiben von weiterer Information in den weiteren Speicherbereich des Informationsträgers, wobei hierbei ggf. Information, die bereits im weiteren Speicher gespeichert ist, überschreibbar ist.

Durch wenigstens eine Lese-/Schreibeinrichtung wie voranstehend ausgeführt sowie ein erfindungsgemäßes Behältnis kann ein Kalibrationssystem realisiert werden. Das Kalibrationssystem kann insbesondere auch eine mit der Lese-/Schreibeinrichtung in Kommunikationsverbindung bringbare elektronische Datenbankeinheit umfassen, in der die einer in einem jeweiligen Behältnis gespeicherten Substanz zugeordnete Identifikationsinformation oder/und weitere dieser Substanz zugeordnete Informationen hinterlegt sind. Die Kommunikationsverbindung kann beispielsweise ein Intranet oder auch das Internet sein. Auf diese Weise kann der Hersteller der im Behältnis gespeicherten Substanz für jeden Nutzer auf sehr einfache Weise Informationen, die die Herstellung bzw. den "Lebenslauf" der gespeicherten Substanz dokumentieren, zugänglich machen. Wird beispielsweise eine zu Kalibrationszwecken vorgesehene Substanz in einer größeren Menge hergestellt, so kann bezüglich jedes Behältnisses, in den diese Substanz abgefüllt wird, anhand der eindeutigen Identifikationsnummer des Behältnisses nachvollzogen werden, an welchem Tag und mit welcher genauen Batchnummer die Substanz hergestellt wurde, bzw. von welchen metrologischen Standards die hergestellte Substanz sich wie ableitet. Hierfür ist es lediglich erforderlich, dass der Hersteller der Substanz bzw. der Abfüller der Substanz in das Behältnis die entsprechende Information der Öffentlichkeit, beispielsweise über das Internet zugänglich macht.

Bei Herstellung eines Behältnisses der genannten Art wird eine Speicherkammer des Behältnisses mit einer vorbestimmten Menge einer Substanz befüllt, dann der Informationsträger, der der Substanz zugeordnete Identifikationsinformation trägt, in die Speicherkammer eingebracht und die Speicherkammer derart verschlossen, dass die Substanz aus der Speicherkammer entnehmbar ist. Das Einbringen des Informationsträgers kann sowohl vor als auch nach dem Befüllen der Speicherkammer mit der Substanz erfolgen. Der Informationsträger wird bevorzugt derart in die Speicherkammer eingebracht, dass er nach Verschließen der Speicherkammer nur unter wenigstens teilweiser Beschädigung der Speicherkammer aus dieser entnehmbar ist. Vorzugsweise wird in unmittelbarer Zuordnung zum Verschließen der Speicherkammerwenigstens eine weitere Information auf dem Informationsträger abgespeichert, insbesondere dessen Herstellungsdatum oder/und dessen Befüllungsdatum. Diese Speicherung erfolgt beispielsweise mittels herkömmlich bekannter Verfahren zur Programmierung von Nur-Lese-Speichern (ROMs). Darüber hinaus kann in unmittelbarer Zuordnung zum Verschließen der Speicherkammer die einer in einem jeweiligen Behältnis gespeicherten Substanz zugeordnete Identifikationsinformation oder/und weitere dieser Substanz zugeordnete Informationen in einer elektronischen Datenbankeinheit hinterlegt werden, wie dies vorangehend für ein Kalibrationssystem beschrieben wurde.

Die Erfindung wird im Folgenden anhand zweier Ausführungsbeispiele unter Bezugnahme auf die begleitenden Zeichnungen näher erläutert. Es zeigt:
- Fig. 1: eine schematische Seitenansicht eines erfindungsgemäßen Behältnisses mit in einer gespeicherten Flüssigkeit schwimmendem Informationsträger und
- Fig. 2: eine weitere Ausführungsform eines erfindungsgemäßen Behältnisses mit in einer Wandung des Behältnisses eingebettetem Informationsträger.

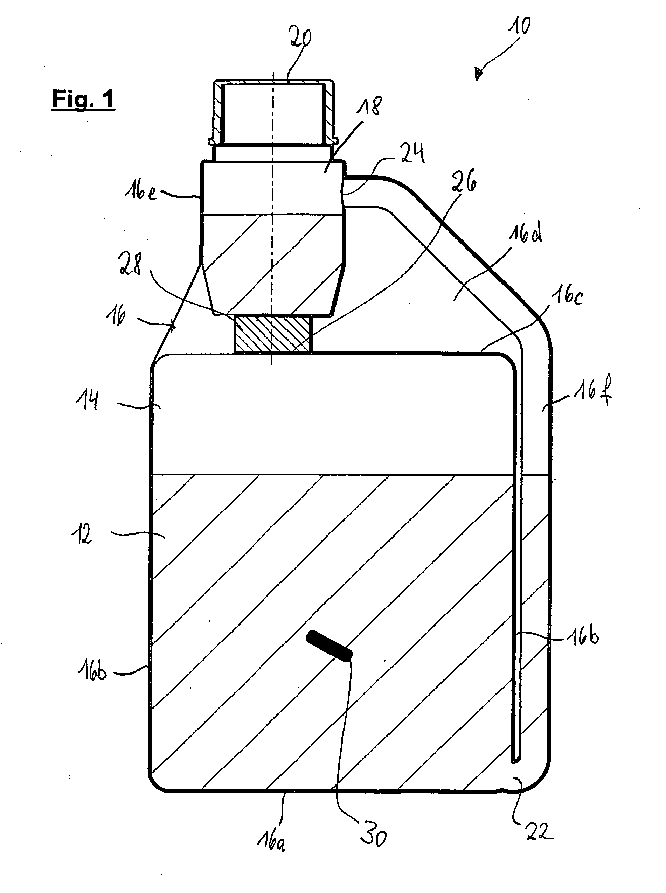

Fig. 1 zeigt ein erfindungsgemäßes Behältnis 10 in der Form einer Flasche. Die Flasche enthält eine Kalibrationslösung, die zur Kalibration von chemischen bzw. biochemischen Sensoren bei der Flüssigkeitsanalyse verwendet wird. Solche Sensoren besitzen in der Regel nur eine eingeschränkte Lebensdauer, in der sie zuverlässig arbeiten. Darüber hinaus ist bei solchen Sensoren das für eine jeweils vorgegebene Konzentration der zu messenden Substanz gelieferte Messsignal in der Regel einer zeitlichen Drift unterworfen, was eine Kalibration des Messsignals in vorgegebenen Zeitabständen notwendig macht. Hierfür werden Kalibrationslösungen verwendet, die eine genau bekannte Menge bzw. Zusammensetzung einer von einem jeweiligen Sensor zu erfassenden chemischen Substanz bzw. Zusammensetzung aufweisen, so dass anhand der auf Grundlage der Kalibrationslösung erhaltenen Messsignale eine Kalibrierung des Messsignalsensors für die jeweils zu messende Substanz möglich ist. Um die Qualität einer Kalibrierung beurteilen zu können bzw. um eine ausreichende Qualität der Analysen jederzeit sicherstellen zu können, ist es wichtig, dass für eine jeweils verwendete Kalibrationslösung eine Reihe zusätzlicher Informationen bekannt sind, insbesondere deren Herstellungsdatum bzw. Befüllungsdatum, Öffnungsdatum sowie die genauen Umstände der Herstellung der Kalibrationslösung. In der Regel werden als Kalibrationslösungen Lösungen verwendet, deren Zusammensetzung sich von bestimmten (inter-)national anerkannten Referenzlösungen (metrologischen Standards) ableiten lässt. Um die Qualität solcher Kalibrationslösungen beurteilen zu können, ist es von größter Wichtigkeit, eine verwendete Kalibrationslösung eindeutig einem bestimmten metrologischen Standard zuordnen zu können bzw. die Art und Weise zu kennen, in der die Ableitung der Kalibrationslösung vom metrologischen Standard erfolgte. Darüber hinaus unterliegen auch Kalibrationslösungen hinsichtlich ihrer Zusammensetzung sehr häufig zeitlichen Veränderungen, so dass die jeweilige Lösung beispielsweise nur innerhalb eines bestimmten Haltbarkeitszeitraums ab der Herstellung der Kalibrationslösung bzw. Öffnung eines Behältnisses mit der Kalibrationslösung verwendbar ist.

Die Zuordnung dieser Informationen zu einer verwendeten Kalibrationslösung sollte möglichst nicht dem Anwender überlassen bleiben, sondern durch den Hersteller der Kalibrationslösung vorgegeben sein, um für jede der durchgeführten Analysen jeweils eine bestimmte Qualität der Datenkalibration belegen zu können. Insbesondere Fehler durch manuelle Eingaben des Anwenders bzw. Manipulationsversuche seitens des Anwenders sollten durch eine möglichst automatisierte Handhabung ausgeschlossen werden können. Darüber hinaus wäre es wünschenswert, wenn auch der Anwender bestimmte Informationen möglichst automatisiert aufzeichnen könnte, etwa Datum bzw. Uhrzeit von durchgeführten Kalibrationen, oder die Mengen verwendeter Kalibrationslösungen, um einerseits belegen zu können, dass seinerseits regelmäßig Kalibrationen durchgeführt wurden und um andererseits vorausberechnen zu können, wann neue Kalibrationslösungen beschafft werden müssen.

Das in Fig. 1 gezeigte Behältnis 10 speichert eine Kalibrationsflüssigkeit 12 in einer Speicherkammer 14, die von einer Wandung 16 umschlossen ist. Die Wandung 16 umfasst einen Boden 16a, Seitenwände 16b (von denen in Fig. 1 jeweils links und rechts eine angedeutet ist) sowie eine Deckenwandung 16c. Alle Wandungen 16a bis 16c bestehen aus einem Kunststoff, wobei das Behältnis 10 beispielsweise als Kunststoffspritzgussteil hergestellt sein kann. An die Deckenwandung 16c (die die eigentliche Decke der Speicherkammer 14 bildet) schließt eine im Wesentlichen senkrecht zur Deckenwandung 16c verlaufende Wandung 16d an, in der eine ebenfalls im Wesentlichen senkrecht zur Deckenwandung 16c verlaufende im Wesentlichen rohrförmige Ausbuchtung 16e ausgebildet ist. Die Ausbuchtung 16e bildet eine nach oben hin offene weitere Kammer, nämlich eine Entnahmekammer 18, auf die ein Schraubdeckel 20 aufschraubbar ist. Mittels in der Entnahmekammer befindlicher Flüssigkeit wird die Kalibrierung durchgeführt. Dies geschieht bevorzugt, indem ein Sensor (z.B. ein pH-Sensor) bei abgeschraubtem Deckel in die Entnahmekammer 18 eingeführt wird, die zu diesem Zweck mit entsprechend großem Volumen bemessen ist. Alternativ kann die Flüssigkeit zur Kalibration auch mittels einer Pipette aus der Entnahmekammer 18 entnommen werden. Darüber hinaus ist am in Fig. 1 rechten Rand in der Wandung 16 (genauer ausgedrückt, in der rechten Seitenwandung 16b sowie der senkrecht zur Deckenwandung 16c verlaufenden Wandung 16d) eine Steigleitung 16f ausgebildet, die die Speicherkammer 12 und die Entnahmekammer 18 zwischen jeweils einer Mündung 22, 24 verbindet. Die Mündung 22 der Steigleitung 16f in die Speicherkammer 12 befindet sich am Boden 16a, während sich die Mündung 24 der Steigleitung 16f in die Entnahmekammer 18 im Wesentlichen in der Nähe des oberen Rands der Entnahmekammer 18 befindet.

Wenn sich eine Kalibrationslösung 12 in der Speicherkammer 14 befindet, steigt der Flüssigkeitspegel wegen der Fluidverbindung zwischen der Steigleitung 16f und der Speicherkammer 14 in beiden Volumina gleich hoch. Kippt man das Behältnis 10 in Fig. 1 nach rechts, so füllt sich die dann am Boden befindliche und im Wesentlichen waagrecht verlaufende Steigleitung 16f mit der Kalibrationslösung und steigt in der Steigleitung 16f weiter nach oben bis in die Entnahmekammer 18 oder fast an den Bereich der Mündung 24 in die Entnahmekammer 18 heranreichend. Kippt man das Behältnis 10 weiter um etwa 90° nach rechts, so dass der Deckel 20 nach unten zeigt, so bricht der Fluidkontakt zwischen der Steigleitung 16f und der Speicherkammer 14 über die Mündung 22 ab, und das sich in der Steigleitung 16f befindliche Volumen von Kalibrationsflüssigkeit 12 fließt in die Entnahmekammer 18. Stellt man nunmehr das Behältnis 10 wieder ein seiner ursprünglichen Orientierung auf der Bodenwandung 16a ab, so ergibt sich die in Fig. 1 gezeigte Situation mit in der Entnahmekammer 18 bis zur Mündung 24 der Steigleitung 16f heranreichendem Pegel der Kalibrationsflüssigkeit 12 (Bei einem höheren Pegel würde ein Teil der Flüssigkeit wieder in die Steigleitung zurückfließen). Je nach Menge der noch in der Speicherkammer 14 vorhandenen Kalibrationsflüssigkeit 12 kann sich in der Entnahmekammer 18 auch ein etwas niedrigerer Pegel der Kalibrationsflüssigkeit 12 einstellen.

Neben dem beschriebenen zweifachen Verkippen des Behältnisses 10 kann bei dem Behältnis 10 Kalibrationsflüssigkeit 12 auch dadurch aus der Speicherkammer 14 in die Entnahmekammer 18 gepumpt werden, dass die Speicherkammer 14 von außen zusammengedrückt wird, wodurch Kalibrationsflüssigkeit in der Steigleitung 16f nach oben steigt und schließlich in die Entnahmekammer 18 mündet, da die Seitenwandungen 16b aus relativ dünnem Kunststoff gebildet sind und daher eine gewisse Elastizität aufweisen oder plastisch verformbar sind.

Zur Entnahme von Kalibrationsflüssigkeit aus der Entnahmekammer 18 wird der Deckel 20 abgeschraubt. In die Entnahmekammer 18 kann beispielsweise eine Pipette zur Entnahme von Flüssigkeit in die nach oben offen stehende Öffnung der Entnahmekammer 18 eingeführt werden. Alternativ kann ein zu kalibrierender Sensor, z.B. ein pH-Sensor, in die Entnahmekammer 18 eingeführt und derart kalibriert werden.

Nach erfolgter Kalibration wird die Entnahmekammer 18 geleert, indem die in der Entnahmekammer 18 befindliche Kalibrationslösung 12 in einen nicht gezeigten Ausfluss weg geschüttet wird. Die gezeigte Anordnung des Behältnisses 10 macht es weitgehend unmöglich, die nicht verbrauchte Kalibrationsflüssigkeit 12 in der Entnahmekammer 18 in die Speicherkammer 14 zurückzuführen. Kippt man nämlich das Behältnis 10 aus der in Fig. 1 gezeigten Situation um 90° nach rechts, um die Flüssigkeit 12 aus der Entnahmekammer 18 durch die Mündung 24 in die Steigleitung 16f zurückfließen zu lassen, so steigt gleichzeitig der Pegel der in der Speicherkammer 14 befindlichen Flüssigkeit 12 in der Steigleitung 16f ebenfalls an und reicht - zumindest bei weitgehend gefüllter Speicherkammer 14 - bis fast in den Mündungsbereich 24 der Steigleitung 16f mit der Entnahmekammer 18 oder sogar noch weiter. Hierdurch wird ein Zurückfließen der Flüssigkeit 12 in die Speicherkammer 14 weitgehend verhindert. Erst bei weitgehend entleerter Speicherkammer 14 kann ein merklicher Teil Kalibrationsflüssigkeit 12 durch die Mündung 24 und die Steigleitung 16f in die Speicherkammer 14 zurückfließen. Will man auch diesen Effekt im Einzelfall weitgehend unterbinden, so kann beispielsweise die Mündung 24 der Steigleitung 16f in die Entnahmekammer 18 bis an den in Fig. 1 links zu sehenden Wandungsbereich der Entnahmekammer 18 geführt sein.

Die Speicherkammer 14 besitzt eine in ihrer Deckenwandung 16c ausgebildete Einfüllöffnung 26, durch die sie mit der Entnahmekammer 18 in Fluidverbindung steht, um das Behältnis 10 mit Kalibrationslösung 12 zu befüllen. Die Einfüllöffnung 26 ist durch einen eingepressten Verschlussstopfen 28 aus Kunststoff fluiddicht verschlossen, wobei der Verschlussstopfen 28 gleichzeitig den Boden der Entnahmekammer 18 bildet. Der Verschlussstopfen 28 wird nach Befüllen des Behältnisses 10 mit Kalibrationslösung 12 unter starkem Druck in die Einfüllöffnung 26 derart eingepresst, dass er - jedenfalls ohne eine weitgehende Zerstörung des fluiddichten Verschlusses der Einfüllöffnung 26 - nicht mehr entfernbar ist.

Bei der in Fig. 1 gezeigten Ausführungsvariante befindet sich ein als RFID (Radiowellenidentifikationsvorrichtungs)-Transponder 30 ausgebildeter Informationsträger frei schwimmend in der Kalibrationslösung 12 innerhalb der Speicherkammer 14. Der RFID-Transponder wurde beim Befüllen der Speicherkammer 14 durch die noch nicht verschlossene Einfüllöffnung 26 mit Kalibrationslösung ebenfalls durch die Einfüllöffnung 26 in die Speicherkammer 14 eingebracht. In Fig. 1 ist angedeutet, dass der Durchmesser der Einfüllöffnung 26 deutlich größer ist als der maximale Durchmesser des RFID-Transponders 30, so dass dieser ohne Weiteres durch die Einfüllöffnung 26 in die Speicherkammer 14 einführbar ist. Nachdem die Einfüllöffnung 26 durch den Verschlussstopfen 28 fluiddicht und nicht mehr entfernbar verschlossen ist, ist auch der RFID-Transponder in der Speicherkammer 14 eingeschlossen.

In Fig. 1 ist ebenfalls angedeutet, dass der Durchmesser der Mündung 22 zwischen der Steigleitung 16f und der Speicherkammer 14 deutlich kleiner ist als der Durchmesser des RFID-Transponders 30, so dass dieser - im Gegensatz zur gespeicherten Kalibrationslösung 12 - nicht durch die Mündung 22 in die Steigleitung 16f und von dort in die Entnahmekammer 18 gelangen kann. Dies ist selbst bei noch so starken bzw. geschickten Schüttel- oder Kippbewegungen des Behältnisses 10 der Fall. Damit ist der RFID-Transponder 30 nach Befüllung der Speicherkammer 14 und Verschließen der Einfüllöffnung 26 für immer unverlierbar in der Speicherkammer 14 eingeschlossen. Er kann selbst unter Aufbietung größerer Anstrengungen nicht aus der Speicherkammer 14 entnommen werden (beispielsweise durch Einführen eines Werkzeugs in die Steigleitung 16f), da er aufgrund seiner Abmessungen diese Steigleitung 16f nicht passieren könnte. Um den RFID-Transponder 30 zu entfernen, wäre es erforderlich, den Verschlussstopfen 28 zu entfernen, was jedoch wegen der mit dem Einpressprozess verbundenen plastischen Verformung der Deckenwandung 16c, 16d zu einer irreparablen Beschädigung des Behältnisses 10 führen würde.

Ein mögliches Wiederauffüllen des Behältnisses 10, nachdem die Kalibrationslösung 12 vollständig entleert wurde, durch die Steigleitung 16f ist zwar unter Umständen denkbar, wird jedoch durch den geringen Querschnitt der Steigleitung 16f und die Anordnung der Mündungen 22, 24 deutlich erschwert, so dass sie für praktische Anwendungen keine praktikable Lösung darstellt.

Der RFID-Transponder 30 ist in der Form eines Einzelchips mit entsprechenden integrierten Schaltkreisen ausgebildet. Um eine Kontamination der Kalibrationslösung 12 durch den RFID-Transponder 30 auszuschließen, ist der RFID-Chip in einer Glasampulle verkapselt. Die Abmessungen der Glasampulle sind wie gesagt so groß, dass die Glasampulle zwar durch die Einfüllöffnung 26 in die Speicherkammer 14 eingeführt werden kann, jedoch nicht durch die Mündung 22 bzw. die Steigleitung 16f aus der Speicherkammer 14 entnommen werden kann.

Der im RFID-Transponder 30 befindliche RFID-Chip wird durch ein nicht gezeigtes Lese-/Schreibgerät drahtlos ausgelesen bzw. beschrieben. Hierfür besitzt der Chip entsprechende Schaltkreise, insbesondere eine Reihe von Speicherbereichen sowie eine Antennenanordnung, durch die der Transponder 30 elektromagnetische Wellen vom Lese-/Schreibgerät empfangen kann und mit Hilfe dieser elektromagnetischen Wellen Daten in entsprechend vorgesehene Speicherbereiche schreiben bzw. Daten aus diesen Speicherbereichen auslesen und an das Lese-/Schreibgerät übertragen kann. Hierfür wird durch das Lese-/Schreibgerät eine entsprechende Software bereitgestellt.

Hardwaremäßig ist der RFID-Chip mit mehreren unterschiedlichen Speicherbereichen ausgerüstet: ein erster Speicherbereich ist ein Nur-Lese-Speicher, der bei Herstellung des RFID-Chips vom Chiphersteller mit einer eindeutigen Identifikationsnummer fix beschreibbar ist. Dieser Speicherbereich ist in der Form eines ROM (Nur-Lese-Speicher) ausgebildet, und kann beispielsweise lediglich durch einen mit der Chipherstellung einhergehenden Photolithographie-Prozess programmiert werden. In diesem Speicherbereich wird daher eine jedem einzelnen RFID-Chip eines RFID-Transponders 30 eineindeutig zugeordnete Identifikationsnummer vorgesehen. Diese Nummer ist während der gesamten Lebensdauer des RFID-Transponders 30 untrennbar mit diesem verbunden.

Ein zweiter Speicherbereich des RFID-Chips des Transponders 30 ist ein Speicherbereich, der auf elektronischem oder optischem Weg nur ein einziges Mal beschrieben werden kann (OTP = one time programmable). In diesem Speicherbereich sind Daten abgespeichert, die lediglich ein einziges Mal geschrieben werden sollen und danach nicht mehr verändert werden sollen, beispielsweise das Herstellungsdatum der Kalibrationslösung bzw. ein Befüllungsdatum des Behältnisses 10 mit der Kalibrationslösung 12.

Weitere Daten dieser Art sind beispielsweise eine Batchnummer, mittels derer die Kalibrationslösung eindeutig einem bestimmten Herstellungstag und Herstellungsprozess zugeordnet werden kann, bzw. der Kalibrationslösung zugeordnete Kalibrationsdaten oder die Nummer eines Zertifikats eines metrologischen Standards, von die Kalibrationslösung abgeleitet ist. All diese Daten sollen durch einen Anwender der Kalibrationslösung nicht mehr verändert werden können, was durch die hardwaremäßige Ausführung dieses Speicherbereichs als OTP-Speicher erreicht wird.

In dem RFID-Chip des Transponders 30 ist ein weiterer Speicherbereich vorgesehen, der - zumindest mit Hilfe eines geeigneten Schreibgeräts - ein oder mehrere Male wiederbeschreibbar ist und beispielsweise als EEPROM- oder optisch programmierbarer Flash-Speicher ausgebildet sein kann. In diesem Speicherbereich sind Daten gespeichert, welche durch einen Anwender veränderbar sein sollen, beispielsweise Datum und Menge der zuletzt durchgeführten Kalibration, bestimmte Kalibrationshinweise durch den Anwender usw.

In dem Speicher des RFID-Chips des Transponders 30 ist auch ein Speicherbereich vorgesehen, in dem das Erstöffnungsdatum des Behältnisses 10 speicherbar ist. Auf diese Weise kann ein mögliches Verfallsdatum einer chemisch nicht 100% stabilen Kalibrationslösung besser überwacht werden, als wenn lediglich auf das Herstellungsdatum Bezug genommen wird. Das Erstöffnungsdatum kann beispielsweise auch in einem als OTP-Speicher ausgebildeten Speicherbereich abgespeichert werden, so dass nach einmal erfolgter Speicherung eines Erstöffnungsdatums dieses nicht mehr veränderbar ist. Sofern man auf diese Funktionalität verzichten kann, ist es selbstverständlich auch denkbar, das Erstöffnungsdatum in dem wiederbeschreibbaren Speicherbereich abzuspeichern. Selbst dann bietet sich noch die Möglichkeit, per Software zu verhindern, dass in einem kompatiblen Lese-/Schreibgerät ein einmal gespeichertes Erstöffnungsdatum überschrieben wird.

Um dem Anwender vollständige Informationen über die verwendete Kalibrationslösung zur Verfügung zu stellen, ist vorgesehen, dass bei Herstellung des Behältnisses 10 die Identifikationsnummer des einem jeden einzelnen Transponder 30 zugeordneten RFID-Chips gelesen wird und in einer Tabelle dem jeweiligen Herstellungsbatch zugeordnet wird. Diese Tabelle wird dann zusammen mit dem Kalibrierschein für diesen Herstellungsbatch im Internet veröffentlicht, so dass der Endkunde jederzeit online die Möglichkeit hat, auf den Kalibrierschein zuzugreifen und damit die verwendete Kalibrationslösung auf den zu Grunde liegenden metrologischen Standard zurückzuführen. Da jeder Transponder 30 eine nur einmal existierende Identifikationsnummer trägt, und da sichergestellt ist, dass in jedem Behältnis nur ein einziges Mal eine eindeutig zugeordnete Kalibrationslösung 12 gespeichert werden kann, hat der Anwender somit jederzeit die Möglichkeit, nachzuweisen, dass tatsächlich die im Kalibrierschein angegebene Kalibrationslösung verwendet wurde und nicht beispielsweise eine unerlaubt hergestellte Kopie verwendet wurde.

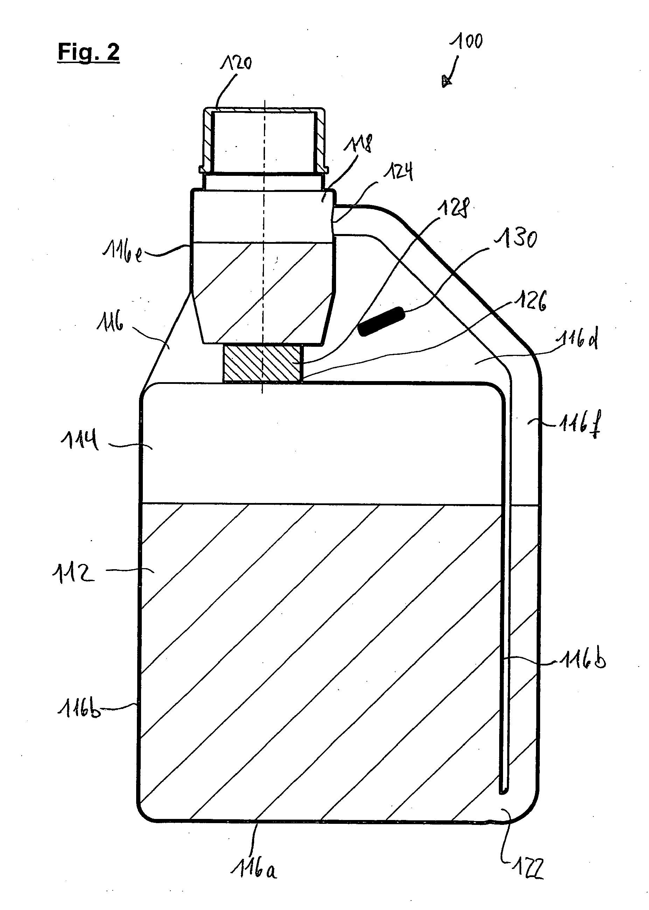

Die Fig. 2 zeigt eine weitere Ausführungsform eines erfindungsgemäßen Behältnisses. Soweit die Gestaltung und Funktion einzelner Komponenten des in Fig. 2 gezeigten Behältnisses 100 derjenigen von Elementen des Behältnisses 10 in Fig. 1 entspricht, sind dieselben Bezugszeichen verwendet, jedoch vermehrt um die Zahl 100. Sofern sich aus der folgenden Beschreibung nichts anderes ergibt, wird für eine nähere Beschreibung dieser Elemente auf die entsprechenden Elemente bei dem Behältnis von Fig. 1 verwiesen.

Das in Fig. 2 gezeigte Behältnis unterscheidet sich von dem in Fig. 1 gezeigten Behältnis lediglich dadurch, dass der Transponder 130 mit dem darin integrierten RFID-Chip nicht wie in Fig. 1 in der Speicherkammer 114 angeordnet ist und in der Kalibrationslösung 112 schwimmt, sondern in die Wandung 116 der Speicherkammer 114 integriert ist. Die Wandung 116 ist hierbei, entsprechend der Wandung der in Fig. 1 gezeigten Ausführungsform, mit einer Wandung 116d ausgebildet, die im Wesentlichen senkrecht zur eigentlichen Deckenwandung 116c der Speicherkammer 114 verläuft, sowie der die Entnahmekammer 118 bildenden rohrförmigen Auswölbung 116e und in ihrem oberen bzw. rechten Randbereich mit einer die Steigleitung 116f bildenden Auswölbung ausgebildet. Die Deckenwandung 116c, die Steigleitung 116f und die Wandung 116e der Entnahmekammer 118 sind durch die Wandung 116d integral miteinander verbunden. Die aus spritzgegossenem Kunststoff hergestellte Wandung 116 besitzt insbesondere im Bereich der senkrechten Wandung 116d eine Dicke (in Fig. 2 nicht gezeigt), die groß genug ist, dass in die Wandung 116d der RFID-Transponder 130 eingegossen werden kann. Der RFID-Transponder 130 ist damit ortsfest und unentnehmbar in der Wandung 116d eingebettet. Um den Transponder 130 zu entfernen, müsste die Wandung 116d gewaltsam aufgeschnitten werden, was zu einer deutlich sichtbaren irreparablen Beschädigung des Behältnisses 100 führen würde.

Hinsichtlich der übrigen Aspekte wird auf die Beschreibung der entsprechenden Komponenten der in Fig. 1 gezeigten Ausführungsform verwiesen, die mit der in Fig. 2 gezeigten Ausführungsform identisch sind.

## Patentansprüche

1. Behältnis (10), umfassend
eine zur Speicherung einer Substanz (12) ausgebildete Speicherkammer (14) mit einer Entnahmeöffnung (22), durch die die Substanz (12) aus der Speicherkammer entnehmbar ist, und
einen dem Behältnis (10) zugeordneten Informationsträger (30), der eine der gespeicherten Substanz (12) zugeordnete Identifikationsinformation trägt,
**dadurch gekennzeichnet, dass** wenigstens im gebrauchsfertig befüllten Zustand des Behältnisses (10) der Informationsträger (30) nur von der Speicherkammer (14) her zugänglich ist.

2. Behältnis (100), umfassend
eine zur Speicherung einer Substanz (112) ausgebildete Speicherkammer (114) mit einer Wandung (116) und einer Entnahmeöffnung (122), durch die die Substanz (12) aus der Speicherkammer (114) entnehmbar ist, und
einen dem Behältnis (100) zugeordneten Informationsträger (130), der eine der gespeicherten Substanz (12) zugeordnete Identifikationsinformation trägt,
**dadurch gekennzeichnet, dass** der Informationsträger in die Wandung (116) integriert oder/und eingebettet ist.

3. Behältnis nach Anspruch 1 oder 2,
**dadurch gekennzeichnet, dass** auf dem Informationsträger (30; 130) wenigstens eine von der Identifikationsinformation unabhängige weitere Information speicherbar ist.

4. Behältnis nach einem der Ansprüche 1 bis 3,
**dadurch gekennzeichnet, dass** die Identifikationsinformation oder/und die weitere Information im gebrauchsfertig befüllten Zustand des Behältnisses (10; 100) und in jedem Zustand nach bestimmungsgemäßer Entnahme der Substanz (12; 112) aus der Speicherkammer (14; 114) aus dem Informationsträger (30; 130) auslesbar ist.

5. Behältnis nach einem der Ansprüche 1 bis 4,
**dadurch gekennzeichnet, dass** die Identifikationsinformation oder/und die weitere Information auf nicht berührende Weise, insbesondere durch elektromagnetische Wellen, aus dem Informationsträger (30; 130) auslesbar ist.

6. Behältnis nach Anspruch 5,
**dadurch gekennzeichnet, dass** die Identifikationsinformation oder/und die weitere Information durch Radiowellen übertragbar ist, vorzugsweise im Langwellenbereich mit Frequenzen zwischen 30 und 50 kHz oder im Kurzwellenbereich mit Frequenzen zwischen 10 und 15 MHz.

7. Behältnis nach einem der Ansprüche 1 bis 6,
**dadurch gekennzeichnet, dass** der Informationsträger (30; 130) ein passiver Radiowellenidentifikations-Transponder (RFID) ist, der vorzugsweise in einem Glaskörper verpackt ist.

8. Behältnis nach einem der Ansprüche 1 bis 7,
**dadurch gekennzeichnet, dass** der Informationsträger (30; 130) einen ersten Speicherbereich zur Speicherung der Identifikationsinformation aufweist, der nur ein einziges Mal, vorzugsweise bei Herstellung des Informationsträgers (30; 130), beschreibbar ist.

9. Behältnis nach einem der Ansprüche 1 bis 8,
**dadurch gekennzeichnet, dass** der Informationsträger (30; 130) einen zweiten Speicherbereich aufweist, der nur ein einziges Mal, vorzugsweise bei der gebrauchsfertigen Befüllung des Behältnisses (10; 100) mit der Substanz (12; 112), beschreibbar ist.

10. Behältnis nach einem der Ansprüche 1 bis 9,
**dadurch gekennzeichnet, dass** der Informationsträger (30; 130) einen dritten Speicherbereich aufweist, der nur ein einziges Mal, vorzugsweise beim erstmaligen Öffnen des Behältnisses (10; 100) zur Entnahme der Substanz (12; 112), beschreibbar ist.

11. Behältnis nach einem der Ansprüche 1 bis 10,
**dadurch gekennzeichnet, dass** der Informationsträger (30; 130) einen vierten Speicherbereich aufweist, der mehrfach überschreibbar ist.

12. Behältnis nach einem der Ansprüche 1 bis 11,
**dadurch gekennzeichnet, dass** wenigstens im gebrauchsfertig befüllten Zustand des Behältnisses (10; 100) die Identifikationsinformation nicht oder nur unter zumindest teilweiser Beschädigung der Speicherkammer (14; 114) oder/und deren Wandung (16; 116) überschreibbar ist.

13. Behältnis nach einem der Ansprüche 1 bis 12,
**dadurch gekennzeichnet, dass** wenigstens im gebrauchsfertig befüllten Zustand des Behältnisses (10; 100) der Informationsträger (30; 130) nicht oder nur unter wenigstens teilweiser Beschädigung der Speicherkammer (14; 114) oder/und deren Wandung (16; 116) aus der Speicherkammer (12; 112) entfernbar ist.

14. Behältnis nach einem der Ansprüche 1 bis 13,
**dadurch gekennzeichnet, dass** der größte Querschnitt der Entnahmeöffnung (22; 122) im wesentlichen kleiner ist als der größte Querschnitt des Informationsträgers (30; 130).

15. Behältnis nach einem der Ansprüche 1 bis 14,
**dadurch gekennzeichnet, dass** die Speicherkammer (14; 140) aus einem Grundkörper (16; 116) und einem mit diesem untrennbar koppelbaren Deckelteil (28; 128) gebildet ist.

16. Behältnis nach einem der Ansprüche 1 bis 15,
**gekennzeichnet durch** eine Einwegverschlussanordnung (26, 28; 126, 128), **durch** die die Speicherkammer (14; 114) zumindest nach Befüllen mit der Substanz (12; 112) derart verschließbar ist, dass die Substanz nach einer Entnahme nicht oder zumindest erschwert in die Speicherkammer (14; 114) zurückführbar ist.

17. Behältnis nach einem der Ansprüche 1 bis 16,
**dadurch gekennzeichnet, dass** die Substanz (12; 112) ein Fluid, vorzugsweise eine Flüssigkeit, insbesondere eine Kalibrationslösung für physikalische, chemische, biochemische oder biologische Spurenstoffsensoren ist.

18. Behältnis nach Anspruch 17,
**dadurch gekennzeichnet, dass** der Informationsträger (30) in der Speicherkammer (14) in dem Fluid (12) frei beweglich aufgenommen ist.

19. Behältnis nach Anspruch 17 oder 18,
**gekennzeichnet durch** eine weitere Entnahmekammer (18; 118) zur Aufnahme **durch** die Entnahmeöffnung (22; 122) entnommenen Fluids (12; 112), die in aufrechter Stellung des Behältnisses (10; 100) oberhalb der Speicherkammer (14; 114) angeordnet ist, wobei die Entnahmekammer (18; 118) eine Mündung (24; 124) einer zur Entnahmeöffnung (22; 122) führenden Fluidleitung (16f; 116f) aufweist, die - zumindest in aufrechter Stellung des Behältnisses (10; 100) und bei Entnahme eines betriebsgemäßen Fluidvolumens - oberhalb des Fluidpegels in der Entnahmekammer (18; 118) liegt.

20. Behältnis nach einem der Ansprüche 17 bis 19,
**dadurch gekennzeichnet, dass** die Speicherkammer (14; 114) komprimierbar ist und die Entnahmeöffnung (22; 122) in einem in aufrechter Stellung des Behältnisses (10; 100) unteren Bereich der Speicherkammer (14; 114) angeordnet ist.

21. Behältnis nach Anspruch 19 oder 20,
**dadurch gekennzeichnet, dass** die an der Mündung (22; 122) der Fluidleitung (16f; 116f) in die Speicherkammer (14; 114) ausgebildete Entnahmeöffnung (22; 122) in jeder Stellung des Behältnisses (10; 100), in der der Pegel eines in der Entnahmekammer (18; 118) befindlichen Fluids höher liegt als die Mündung der Fluidleitung (16f; 116f) in die Entnahmekammer (18; 118), höher liegt als die Mündung der Fluidleitung (16f; 116f) in die Entnahmekammer (18; 118).

22. Lese-/Schreibeinrichtung für einen in einem Behältnis (10; 100) nach einem der Ansprüche 1 bis 21 befindlichen Informationsträger (30; 130), umfassend
eine Aufnahme für das Behältnis (10; 100),
eine Einrichtung zum berührungslosen Lesen von in einem ersten Speicherbereich des Informationsträgers (30; 130) oder/und von in wenigstens einem weiteren Speicherbereich des Informationsträgers (30; 130) gespeicherter Information.

23. Lese-/Schreibeinrichtung nach Anspruch 22, **gekennzeichnet durch** eine Einrichtung zum Schreiben von weiterer Information in den weiteren Speicherbereich des Informationsträgers (30; 130), ggf. unter Überschreiben bereits im weiteren Speicherbereich gespeicherter Information.

24. Kalibrationssystem, umfassend ein Behältnis (10; 100) nach einem der Ansprüche 1 bis 21 und eine Lese-/Schreibeinrichtung nach Anspruch 22 oder 23.

25. Kalibrationssystem nach Anspruch 24, **gekennzeichnet durch** eine mit der Lese-/Schreibeinrichtung in Kommunikationsverbindung bringbare elektronische Datenbankeinheit, in der die einer in einem jeweiligen Behältnis (10; 100) gespeicherten Substanz (12; 112) zugeordnete Identifikationsinformation oder/und weitere dieser Substanz (12; 112) zugeordnete Informationen hinterlegt sind.
